# EUROPEAN PATENT SPECIFICATION

(11) **EP 4 556 871 B1**
(45) Date of publication and mention of the grant of the patent: **27.05.2026**
(21) Application number: 24196209.1
(22) Date of filing: 23.08.2024
(51) Int. Cl.: G01K 1/14, G01K 1/16, H01M 10/48, H01M 50/505, H01M 50/507

(54) **TEMPERATURE MEASUREMENT APPARATUS AND BATTERY MODULE INCLUDING THE SAME**
TEMPERATURMESSVORRICHTUNG UND BATTERIEMODUL DAMIT
APPAREIL DE MESURE DE TEMPÉRATURE ET MODULE DE BATTERIE LE COMPRENANT

(30) Priority: 20.11.2023 KR 20230159968
(43) Date of publication of application: 21.05.2025
(73) Proprietor: Samsung SDI Co., Ltd, Gyeonggi-do 17084 (KR)
(72) Inventor: Ahn, Jae Pil, 16678 Suwon-si, Gyeonggi-do (KR); Yun, Chul Jung, 16678 Suwon-si, Gyeonggi-do (KR)
(74) Representative: Gulde & Partner

(56) References cited:
- EP-A1- 3 800 729
- WO-A1-2023/167149
- US-A1- 2021 320 338
- US-A1- 2022 304 158

## Description

### BACKGROUND

### 1. Field of the Invention

The present disclosure relates to a temperature measurement apparatus and a battery module including the same.

### 2. Discussion of Related Art

Secondary batteries are batteries that are able to be charged and discharged, unlike primary batteries that are not able to be recharged. Low-capacity secondary batteries are used in small portable electronic devices such as smartphones, feature phones, laptop computers, digital cameras, and camcorders, and high-capacity secondary batteries are widely used as power sources for driving motors of hybrid vehicles, electric vehicles, or the like, and as batteries for power storage. The secondary battery includes an electrode assembly having a positive electrode and a negative electrode, a case accommodating the positive electrode and the negative electrode, an electrode terminal connected to the electrode assembly, and the like.

Secondary batteries are widely used for driving or storing energy in small devices such as portable electronic devices, as well as medium to large-sized devices such as electric vehicles and energy storage systems (ESS). In particular, in the case of medium to large-sized devices, one battery module is constituted by a plurality of battery cells electrically connected to each other to improve output and capacity of a battery.

The battery module may be equipped with a temperature sensor for measuring the temperature of the battery cells to detect the risk of explosion due to overheating in advance and take protective actions. Examples may be found in EP 3 800 729 A1, US 2021/320338 A1, US 2022/304158 A1, or WO 2023/167149 A1.

The above-described information disclosed in the technology that forms the background of the present disclosure is only intended to improve understanding of the background of the present disclosure, and thus may include information that does not constitute the related art.

### SUMMARY OF THE INVENTION

An aspect of embodiments of the present disclosure is directed to providing a temperature measurement apparatus capable of stably fixing a position of a temperature sensor, and a battery module including the same. Further, the present disclosure is directed to a significantly shortened manufacturing processes.

These and other aspects and features of the present disclosure will be described in or will be apparent from the following description of some embodiments of the present disclosure.

According to one or more embodiments, a temperature measurement apparatus includes a bus bar holder comprising an alignment hole, a first substrate seated on the bus bar holder, a second substrate extending from the first substrate and comprising first and second surfaces opposite to each other, a temperature sensor disposed on the first surface, a first protection member disposed on the first surface, a second protection member disposed on the second surface and surrounding the temperature sensor, and a support member provided on the bus bar holder and configured to support the second substrate with respect to the alignment hole.

The first protection member includes a first protection body disposed to surround the temperature sensor and an extension portion extending from the first protection body and configured to be movably connected to the support member. In other words, the first protection member may include a first protection body, which is disposed on the first surface and surrounds the temperature sensor. In result, the first protection member (partially) sterically shields the temperature sensor.

The support member includes a support body disposed to surround the alignment hole. The support member further includes a guide rail concavely formed from an inner surface of the support body and comprising a first end and a second end spaced apart from the first end in a first direction. The support member further includes an entry hole disposed at the first end and passing through the support body, and a stopper disposed at the second end and supporting the extension portion. The extension portion is configured to be inserted into the guide rail in the first direction (e.g. direction along z-axis). In other words, the extension portion of the first protection member may protrude in a first direction (e.g. direction along z-axis) into the guide rail of the support member. Thus, the extension portion of the first protection member may interlock the second substrate in the guide rail of the support member.

The temperature measurement apparatus may further include a first separation prevention member disposed between the entry hole and the stopper. The first separation prevention member may be configured to restrict movement of the second substrate in a direction opposite to the first direction.

The first separation prevention member may protrude from the guide rail in a direction intersecting the first direction.

The extension portion may include a first extension surface extending from the first protection body in a direction intersecting the first direction and a second extension surface extending from the first protection body and disposed to be inclined with respect to the first extension surface, and the first extension surface may be disposed to face the first separation prevention member as the second extension surface is in contact with the stopper.

The temperature measurement apparatus may further include a second separation prevention member spaced apart from the first separation prevention member and configured to restrict movement of the second substrate in a direction intersecting the first direction (e.g. a direction along y-axis or x-axis).

The second separation prevention member may extend from the second protection member in the direction intersecting the first direction (e.g. a direction along y-axis or x-axis) and may be in close contact with the inner surface of the support body.

An end of the second separation prevention member may be formed to be curved at a set curvature.

The support body may include a first support surface disposed to face the alignment hole and a second support surface extending from the first support surface and disposed outside the alignment hole, and the second separation prevention member may be in close contact with the first support surface.

The temperature measurement apparatus may further include a third separation prevention member extending from the second support surface and configured to prevent the second separation prevention member from being separated from the first support surface.

The third separation prevention member may include a catching surface extending from the second support surface in the direction intersecting the first direction and disposed to face the second separation prevention member and an inclined surface obliquely extending from the catching surface toward the second support surface.

According to one or more embodiments, a battery module includes a housing, a plurality of battery cells disposed inside the housing, and a temperature measurement apparatus configured to measure temperature of the battery cells, in which the temperature measurement apparatus includes a bus bar holder disposed to face the battery cells and having an alignment hole, a first substrate seated on the bus bar holder, a second substrate extending from the first substrate and comprising first and second surfaces opposite to each other, a temperature sensor disposed on the first surface, a first protection member disposed on the first surface and configured to protect the temperature sensor, a second protection member disposed on the second surface and configured to protect the temperature sensor, and a support member provided on the bus bar holder and configured to support the second substrate with respect to the alignment hole.

The second protection member may be disposed to be spaced apart from the battery cells.

In accordance with one or more embodiments of the present disclosure, the efficiency of assembly work can be improved by a support member for aligning a position of a second substrate with respect to an alignment hole.

In accordance with one or more embodiments of the present disclosure, a first separation prevention member, a second separation prevention member, and a third separation prevention member can restrict vertical and horizontal movement of the second substrate, thereby preventing a relative position of a temperature sensor with respect to a battery cell from being randomly changed and improving the accuracy of temperature detection.

In accordance with one or more embodiments of the present disclosure, as a second protection member is spaced apart from a battery cell, a process of welding an existing metal tab to the battery cell can be eliminated, thereby reducing process costs and preventing defects caused by welding.

In accordance with one or more embodiments of the present disclosure, damage to a temperature sensor can be prevented and coating costs can be reduced by first and second protection members for protecting the temperature sensor from both sides.

In accordance with one or more embodiments of the present disclosure, the first protection member and the second protection member can be laminated on the second substrate through a lamination process during a manufacturing process of the second substrate, thereby significantly shortening a process time required by existing double-sided soldering.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is an exploded perspective view schematically illustrating a configuration of a battery module according to one embodiment of the present disclosure;
FIG. 2 is a perspective view schematically illustrating a configuration of a battery cell according to one embodiment of the present disclosure;
FIG. 3 is a cross-sectional view schematically illustrating the configuration of the battery cell according to one embodiment of the present disclosure;
FIG. 4 is a perspective view schematically illustrating a configuration of a temperature measurement apparatus according to one embodiment of the present disclosure;
FIG. 5 is a bottom perspective view schematically illustrating the configuration of the temperature measurement apparatus according to one embodiment of the present disclosure;
FIG. 6 is a cross-sectional perspective view schematically illustrating the configuration of the temperature measurement apparatus according to one embodiment of the present disclosure;
FIG. 7 is a cross-sectional view taken along line A-A' in FIG. 4;
FIG. 8 is a cross-sectional view taken along line B-B' in FIG. 4;
FIG. 9 is a cross-sectional view taken along line C-C' in FIG. 4;
FIG. 10 is a view schematically illustrating a configuration of a first separation prevention member according to one embodiment of the present disclosure;
FIG. 11 is a view schematically illustrating configurations of a second separation prevention member and a third separation prevention member according to one embodiment of the present disclosure; and
FIGS. 12 to 17 are views schematically illustrating an assembly process of a battery module according to one embodiment of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

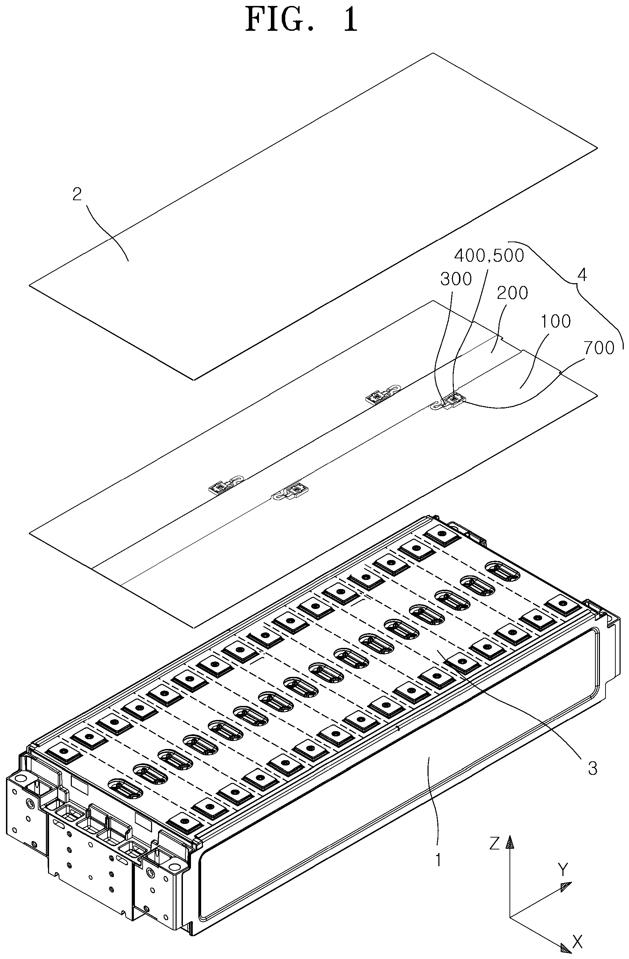

FIG. 1 is an exploded perspective view schematically illustrating a configuration of a battery module according to a first embodiment of the present disclosure.

Referring to FIG. 1, the battery module according to the present embodiment includes a housing 1, a battery cell 3, and a temperature measurement apparatus 4.

The housing 1 may form a schematic exterior of the battery module and support the battery cell 3 and the temperature measurement apparatus 4, which will be described below, as a whole. The housing 1 may be formed to have a box shape with an empty interior and an open top. A cover 2 for opening and closing an internal space of the housing 1 may be disposed on an upper side of the housing 1. A specific shape of the housing 1 is not limited to a shape illustrated in FIG. 1, and the design thereof may be changed in various ways depending on the number and shape of the battery cell 3.

The battery cell 3 may function as a unit structure for storing and supplying power in the battery module.

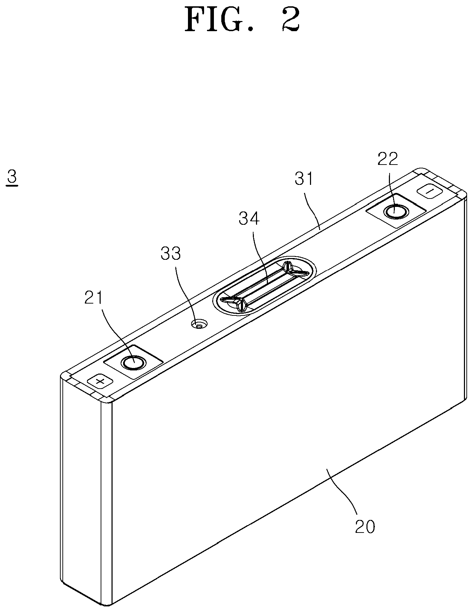

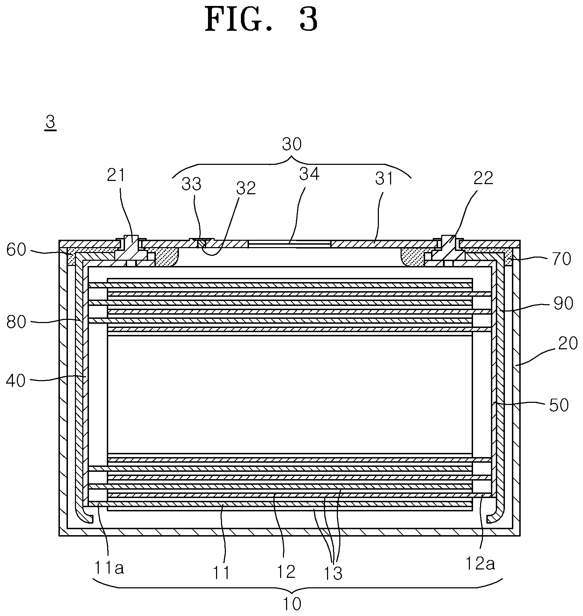

FIG. 2 is a perspective view schematically illustrating a configuration of a battery cell according to one embodiment of the present disclosure, and FIG. 3 is a cross-sectional view schematically illustrating the configuration of the battery cell according to one embodiment of the present disclosure.

Referring to FIGS. 2 and 3, the battery cell 3 may include at least one electrode assembly 10 formed by winding a positive electrode 11 and a negative electrode 12 with a separator 13, which is an insulator, interposed therebetween, a case 20 in which the electrode assembly 10 is installed, and a cap assembly 30 coupled to an opening of the case 20.

The battery cell 3 is a lithium ion secondary battery and is described as an example in a prismatic form. However, the present disclosure is not limited thereto, and the battery cell 3 may be a lithium polymer battery or a cylindrical battery.

The positive electrode 11 and the negative electrode 12 may include a coated portion that is a region where an active material is applied to a current collector formed of a thin metal foil and uncoated portions 11a and 12a that are regions that are not coated with the active material.

The positive electrode 11 and the negative electrode 12 may be wound after interposing the separator 13, which is an insulator, therebetween. However, the present disclosure is not limited thereto, and the electrode assembly 10 may have a structure in which positive electrodes and negative electrodes composed of a plurality of sheets are alternately stacked with a separator interposed therebetween.

The case 20 forms the overall exterior of the battery cell 3 and may be made of a conductive metal such as aluminum, an aluminum alloy, or nickel-plated steel. In addition, the case 20 may provide a space in which the electrode assembly 10 is accommodated.

The cap assembly 30 may include a cap plate 31 that covers the opening of the case 20, and the case 20 and the cap plate 31 may be made of a conductive material. Here, positive and negative electrode terminals 21 and 22 electrically connected to the positive electrode 11 or the negative electrode 12 may be installed to protrude outward through the cap plate 31.

In addition, an outer peripheral surface of an upper pillar of the positive and negative terminals 21 and 22 protruding outward from the cap plate 31 may be threaded and fixed to the cap plate 31 with a nut.

However, the present disclosure is not limited thereto, and the positive and negative terminals 21 and 22 may have a rivet structure so as to be riveted, or may be welded to the cap plate 31.

In addition, the cap plate 31 may be made of a thin plate and coupled to the opening of the case 20, and in the cap plate 31, an electrolyte inlet 32 where a sealing stopper 33 is to be installed may be formed and a vent 34 in which a notched part 34a is formed may be installed.

The positive and negative electrode terminals 21 and 22 may be electrically connected to current collectors including first and second current collectors 40 and 50 (hereinafter referred to as "positive and negative current collectors") that are coupled by welding to the positive uncoated region 11a or the negative uncoated region 12a.

For example, the positive and negative electrode terminals 21 and 22 may be coupled to the positive and negative current collectors 40 and 50 by welding. However, the present disclosure is not limited thereto, and the positive and negative electrode terminals 21 and 22 and the positive and negative current collectors 40 and 50 may be formed by being integrally combined.

In addition, an insulating member may be installed between the electrode assembly 10 and the cap plate 31. Here, the insulating member may include first and second lower insulating members 60 and 70, and each of the first and second lower insulating members 60 and 70 may be installed between the electrode assembly 10 and the cap plate 31.

In addition, according to the present embodiment, one end of a separating member that is capable of being installed to face one side surface of the electrode assembly 10 may be installed between the insulating member and the positive or negative electrode terminal 21 or 22.

Here, the separating member may include a first separating member 80 and a second separating member 90.

Therefore, respective one ends of the first and second separating members 80 and 90 that is capable of being installed to face side surfaces of the electrode assembly 10 may be installed between the first lower insulating member 60 and the positive electrode terminal 21 and between the second lower insulating member 70 and the negative electrode terminal 22.

As a result, the positive and negative electrode terminals 21 and 22 coupled by welding to the positive and negative current collectors 40 and 50 may be coupled to the first and second lower insulating members 60 and 70 and the ends of the first and second separating members 80 and 90.

A plurality of battery cells 3 may be provided. The plurality of battery cells 3 may be disposed inside the housing 1. The plurality of battery cells 3 may be arranged in a row inside the housing. As one example, the battery cells 3 may be arranged along a direction parallel to an X-axis based on FIG. 1. The number of battery cells 3 is not limited to the number illustrated in FIG. 1, and the design thereof may be changed in various ways depending on the size of the battery module or the like.

The temperature measurement apparatus 4 is disposed inside the housing 1 and measures the temperature of the battery cells 3.

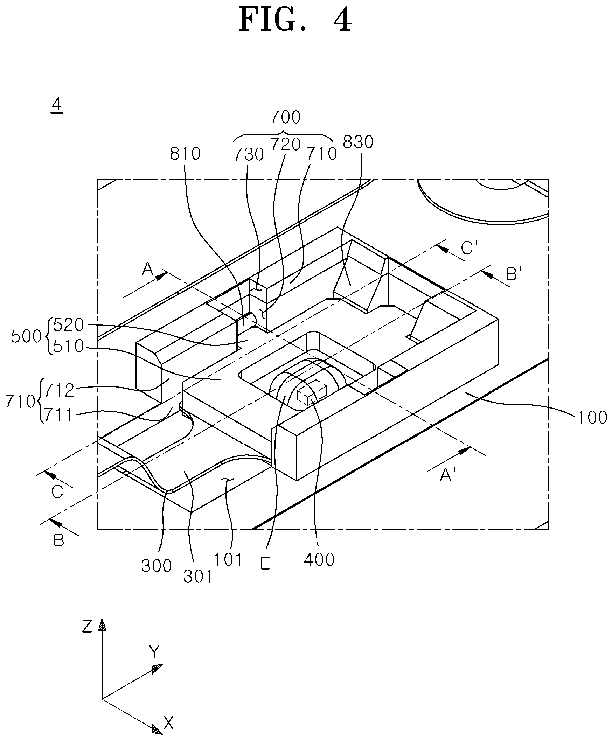

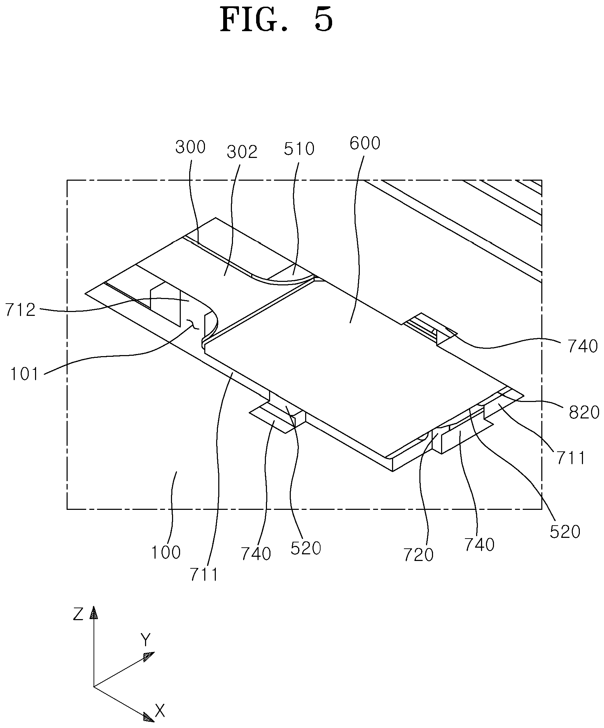

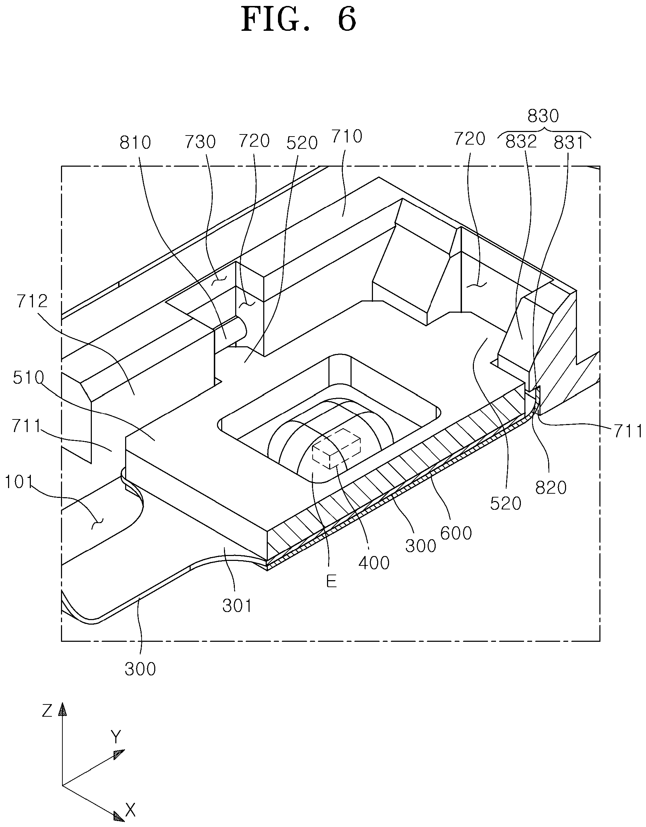

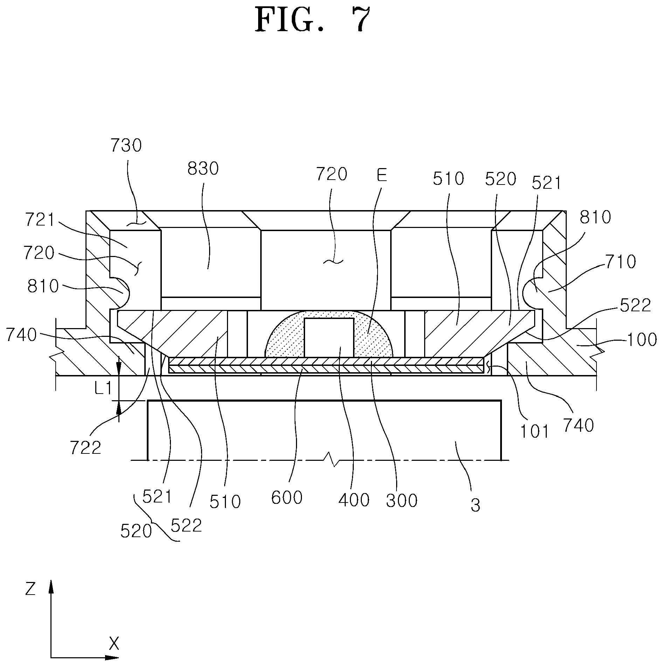

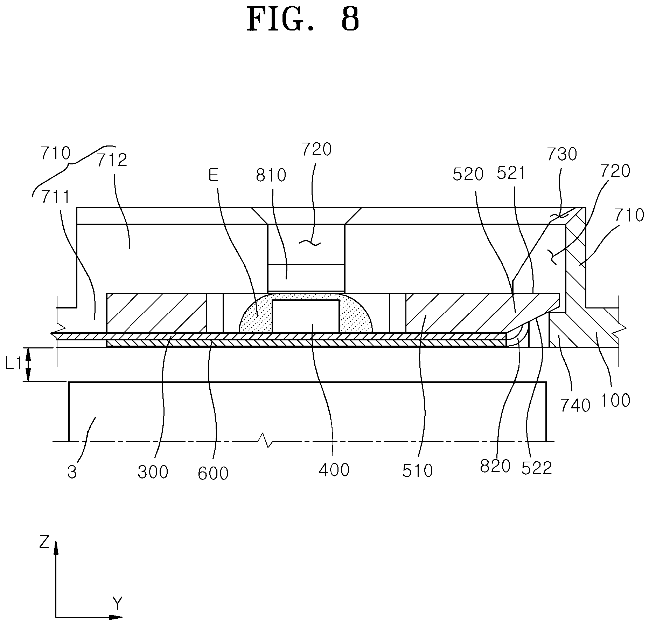

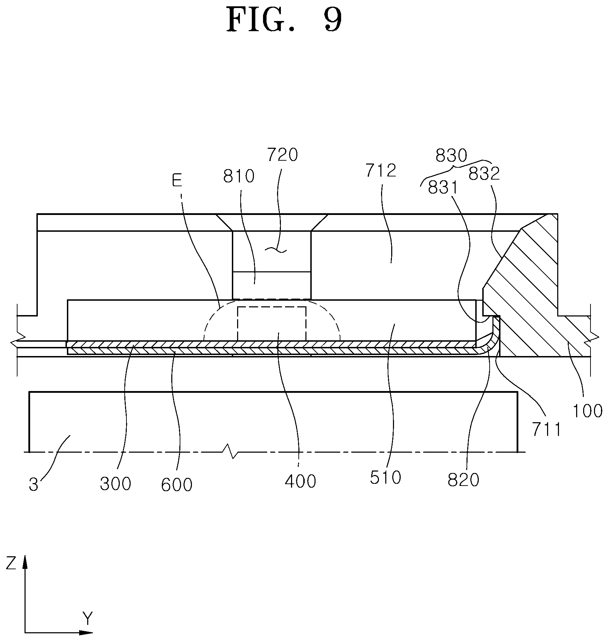

FIG. 4 is a perspective view schematically illustrating a configuration of a temperature measurement apparatus according to one embodiment of the present disclosure, FIG. 5 is a bottom perspective view schematically illustrating the configuration of the temperature measurement apparatus according to one embodiment of the present disclosure, FIG. 6 is a cross-sectional perspective view schematically illustrating the configuration of the temperature measurement apparatus according to one embodiment of the present disclosure, FIG. 7 is a cross-sectional view taken along line A-A' in FIG. 4, FIG. 8 is a cross-sectional view taken along line B-B' in FIG. 4, and FIG. 9 is a cross-sectional view taken along line C-C' in FIG. 4.

Referring to FIGS. 1 to 8, the temperature measurement apparatus 4 includes a bus bar holder 100, a first substrate 200, a second substrate 300, a temperature sensor 400, a first protection member 500, a second protection member 600, and a support member 700.

The bus bar holder 100 may be disposed to face the battery cells 3 inside the housing 1. The bus bar holder 100 may be formed to have a substantially flat shape. A lower surface of the bus bar holder 100 may be disposed to face upper surfaces of the battery cells 3. An area of the bus bar holder 100 may be greater than the sum of areas of the upper surfaces of the plurality of battery cells 3. The bus bar holder 100 may be supported by being coupled to the housing 1 or the cover 2. A longitudinal direction of the bus bar holder 100 described below may refer to a direction in which the plurality of battery cells 3 are arranged, that is, a direction parallel to a Y-axis direction based on FIG. 1, and a width direction of the bus bar holder 100 may refer to a direction parallel to an X-axis direction based on FIG. 1.

A bus bar (not illustrated) for electrically connecting the plurality of battery cells 3 to each other may be installed in the bus bar holder 100. The bus bar may be exemplified by various types of bus bars capable of being electrically connected to the battery cells 3. FIG. 1 illustrates an example in which a single bus bar is formed, but the present embodiment is not limited thereto, and a plurality of bus bars B may be formed. In this case, the plurality of bus bars B may have various numbers and arrangement forms depending on the number of the plurality of battery cells 3, the series and parallel structures between the plurality of battery cells 3, or the like.

An alignment hole 101 for forming a contact path between the battery cell 3 and the temperature sensor 400 may be formed in the bus bar holder 100. The alignment hole 101 may be formed to have a shape of a hole vertically passing through the bus bar holder 100. A plurality of alignment holes 101 may be provided. Each alignment hole 101 may be disposed to individually face an upper surface of a different battery cell 3. The number of alignment holes 101 may be less than the number of battery cells 3, or may be equal to the number of battery cells 3.

The first substrate 200 may be seated on an upper surface of the bus bar holder 100. The first substrate 200 may be a flexible circuit board that includes a conductive pattern (not illustrated) for communicating current and a flexible insulating film (not illustrated) for insulating the conductive pattern (not illustrated). In some examples, the flexible circuit board may be referred to as a flexible printed circuit assembly (FPCA) or flexible printed circuit board (FPCB). An area of the first substrate 200 may be smaller than an area of the bus bar holder 100. The first substrate 200 may be disposed so that a longitudinal direction thereof is parallel to the longitudinal direction of the bus bar holder 100, that is, a direction in which the plurality of battery cells 3 are arranged. As one example, the first substrate 200 may be disposed so that the longitudinal direction thereof is parallel to the Y-axis direction based on FIG. 1. The first substrate 200 may be fixed to an upper surface of the bus bar holder 100 by various types of fixing means such as adhesive, double-sided tape, bolts, hooks, and the like. The first substrate 200 may be connected to an external control system such as a battery management system (BMS) through a separate connector (not illustrated).

The second substrate 300 may extend from the first substrate 200 and support the temperature sensor 400. Like the first substrate 200, the second substrate 300 may be a flexible circuit board that includes a conductive pattern (not illustrated) for communicating current and a flexible insulating film (not illustrated) for insulating the conductive pattern (not illustrated). An end of the second substrate 300 may be disposed to be inserted into the alignment hole 101 and directly face the upper surfaces of the battery cells 3. The second substrate 300 may have a second surface 302 facing the battery cells 3 and a first surface 301 opposite to the second surface 302. As one example, based on FIGS. 4 and 5, the first surface 301 may be an upper surface of the second substrate 300, and the second surface 302 may be a lower surface of the second substrate 300. The end of the second substrate 300 may be inserted into the alignment hole 101 along the first direction. Hereinafter, the first direction will be described by way of example as a direction vertically passing through the second surface 302 from the first surface 301, that is, a direction parallel to a Z-axis based on FIG. 4 and facing downward. However, the first direction is not limited thereto, and the design thereof may be changed in various ways within a range of directions allowing the end to be inserted into the alignment hole 101 from the outside of the alignment hole 101.

A plurality of second substrate 300 may be provided. The plurality of second substrates 300 may be arranged at set intervals along the longitudinal direction of the first substrate 200. The number of the plurality of second substrates 300 may be equal to the number of alignment holes 101. The interval between neighboring second substrates 300 may be the same as the interval between neighboring alignment holes 101.

The temperature sensor 400 may be disposed on the first surface 301 of the second substrate 300 and may detect the temperature of the battery cells 3. The temperature sensor 400 may be exemplified as a thermistor for measuring temperature using the characteristic of increasing or decreasing resistance depending on temperature, such as a positive temperature coefficient thermistor (PTC) or a negative temperature coefficient thermistor (NTC). The temperature sensor 400 may be fixed to the first surface 301 of the second substrate 300. More specifically, the temperature sensor 400 may be soldered onto the first surface 301 of the second substrate 300. The temperature sensor 400 may be disposed at an end of the second substrate 300. A detection signal detected from the temperature sensor 400 may be transmitted to the first substrate 200 through the second substrate 300 and may be transmitted to a battery management system (BMS) through the first substrate 200.

A coating layer E may be disposed outside the temperature sensor 400. The coating layer E may be disposed to surround the temperature sensor 400 and may protect the temperature sensor 400 from external moisture, foreign substances, shock, and the like. The coating layer E may be formed to have an approximate dome shape and may be disposed to entirely surround an upper space of the temperature sensor 400. The coating layer E may be made of a material such as epoxy resin, acrylic, polyurethane, silicone, parylene, or the like, to completely seal the temperature sensor 400 from an external space. The coating layer E may be applied to the temperature sensor 400 by a method such as spraying, dip coating, or the like.

The first protection member 500 is disposed on the first surface 301 of the second substrate 300. The first protection member 500 may function as a component for protecting the temperature sensor 400 from external impact and interference with adjacent components on the first surface 301 of the second substrate 300.

The first protection member 500 may include a first protection body 510 and an extension portion 520.

The first protection body 510 may be disposed to be fixed on the first surface 301 of the second substrate 300 and surround the temperature sensor 400. The first protection body 510 may be formed to have the shape of a square ring with a hollow formed in a central portion. The first protection body 510 may be in contact with the first surface 301 of the second substrate 300 in a state in which the central portion is disposed to face the temperature sensor 400. A height of the first protection body 510 may be greater than a height of the temperature sensor 400 and the coating layer E. Accordingly, the first protection body 510 may reduce a thickness of the coating layer E and simplify a manufacturing process of the coating layer E by blocking the path through which external foreign substances or adjacent parts directly contact the temperature sensor 400. The first protection body 510 may be attached to the first surface 301 of the second substrate 300 through a lamination process during a manufacturing process of the second substrate 300.

The extension portion 520 may extend from the first protection body 510 and may be movably connected to the support member 700, which will be described below. A plurality of extension portions 520 may be provided. The plurality of extension portions 520 may be disposed to be spaced apart from each other along the peripheral surface of the first protection body 510. The extension portion 520 may be provided to be elastically deformable. For example, the extension portion 520 may be made of a flexible material such as plastic.

The extension portion 520 may include a first extension surface 521 and a second extension surface 522.

The first extension surface 521 may form the exterior of one side of the extension portion 520 and may extend from the peripheral surface of the first protection body 510 in a direction intersecting the first direction. As one example, the first extension surface 521 may extend from the peripheral surface of the first protection body 510 in a direction perpendicular to the first direction. That is, the first extension surface 521 may be disposed parallel to an X-Y plane based on FIGS. 4 and 5.

The second extension surface 522 may form the exterior of the other side of the extension portion 520 and may be disposed to be inclined with respect to the first extension surface 521. The second extension surface 522 may be disposed to be spaced apart from the first extension surface 521 along the first direction. That is, the second extension surface 522 may be disposed below the first extension surface 521. An end of the second extension surface 522 may extend to be inclined upward from a lower side of the first extension surface 521 toward an end of the first extension surface 521. Accordingly, the extension portion 520 may have a shape whose height gradually decreases toward the end.

The second protection member 600 may be disposed on the second surface 302 of the second substrate 300. The second protection member 600 may protect the temperature sensor 400 from external impact and interference with adjacent components on the second surface 302 of the second substrate 300. The second protection member 600 may structurally support the second substrate 300 by its own rigidity during a process of mounting the temperature sensor 400 on the first surface 301 of the second substrate 300.

The second protection member 600 may be formed to have an approximately flat shape. The second protection member 600 may be disposed to face the first protection body 510 with the second substrate 300 interposed therebetween. The second protection member 600 may be disposed between the second surface 302 of the second substrate 300 and the upper surfaces of the battery cells 3. An upper surface of the second protection member 600 may be fixed to the second surface 302 of the second substrate 300. As one example, the upper surface of the second protection member 600 may be attached to the second surface 302 of the second substrate 300 through the lamination process during the manufacturing process of the second substrate 300.

The second protection member 600 may be made of a metal material with high thermal conductivity and rigidity, such as aluminum or nickel. Accordingly, the second protection member 600 may function as a component for transferring heat generated from the battery cells 3 to the temperature sensor 400.

A lower surface of the second protection member 600 may be disposed to be spaced apart from the upper surfaces of the battery cells 3. For example, a gap between the second protection member 600 and the battery cells 3 may be 1 mm or more and 2.5 mm or less. More preferably, the gap between the second protection member 600 and the battery cells 3 may be 1.67 mm. When the gap between the second protection member 600 and the battery cells 3 is greater than 2.5 mm, a thermal time constant of the temperature sensor 400 may increase and a difference between the actual temperature of the battery cells 3 and the temperature detected by the temperature sensor 400 may excessively increase due to thermal resistance. When the gap between and the second protection member 600 and the battery cells 3 is less than 1 mm, the temperature sensor 400 may be damaged due to collision with the battery cells 3 of the second protection member 600 due to assembly tolerances and the like.

The support member 700 may be provided on the bus bar holder 100 and may support the second substrate 300 with respect to the alignment hole 101. That is, the support member 700 may function as a component for guiding an assembly position of the second substrate 300 with respect to the alignment hole 101.

The support member 700 may include a support body 710, a guide rail 720, an entry hole 730, and a stopper 740.

The support body 710 may be connected to the bus bar holder 100 and may form a rough exterior of the support member 700. The support body 710 may be formed to have the shape of a partition extending vertically upward from the upper surface of the bus bar holder 100. The support body 710 may extend along an edge of the alignment hole 101 and may be disposed to surround the alignment hole 101. The support body 710 may have one side open to prevent interference with a section between the first substrate 200 and the second substrate 300. Accordingly, the support body 710 may be formed to have an approximately "U" shaped cross-sectional shape.

The support body 710 may include a first support surface 711 and a second support surface 712.

The first support surface 711 may refer to an area directly facing a peripheral surface of the alignment hole 101 in the entire inner surface of the support body 710. The second support surface 712 may be an area excluding the first support surface 711 in the entire inner surface of the support body 710, and may refer to an area that does not face the peripheral surface of the alignment hole 101.

The guide rail 720 may be formed to be concave from an inner surface of the support body 710 and may be formed to have the shape of a groove having a first end 721 and a second end 722. A longitudinal direction of the guide rail 720 may extend along the first direction, that is, the vertical direction. That is, the second end 722 of the guide rail 720 may be disposed at a position spaced apart from the first end 721 in the first direction. The first end 721 may be formed to be concavely recessed from the second support surface 712, and the second end 722 may be formed to be concavely recessed from the first support surface 711.

The extension portion 520 may be inserted into the guide rail 720 in the first direction. More specifically, the extension portion 520 may be inserted into the guide rail 720 in a direction from the first end 721 to the second end 722 through the entry hole 730, which will be described below. The extension portion 520 may be inserted into the guide rail 720 in a state in which the second extension surface 522 is disposed to face the second end 722. A width of the extension portion 520 may be smaller than a width of the guide rail 720. Accordingly, the extension portion 520 may be smoothly moved along the longitudinal direction of the guide rail 720.

A plurality of guide rails 720 may be provided. The number of the plurality of guide rails 720 may be equal to the number of the plurality of extension portions 520. Each of the guide rails 720 may be disposed at a position facing a different extension portion 520. The plurality of extension portions 520 may be individually inserted into each guide rail 720.

The entry hole 730 may be disposed at the first end 721 of the guide rail 720 and may guide the extension portion 520 to be inserted into the guide rail 720. The entry hole 730 may extend from the first end 721 in a direction opposite to the first direction and may be formed to have the shape of a hole passing through an upper surface of the support body 710. A width of the entry hole 730 may be greater than the width of the guide rail 720. The width of the entry hole 730 may gradually become narrower toward the first end 721.

The stopper 740 may be disposed at the second end 722 of the guide rail 720 and may support the extension portion 520 with respect to the guide rail 720. That is, the stopper 740 may function as a component for preventing the extension portion 520 from being separated outside the guide rail 720 through the second end 722 of the guide rail 720. Accordingly, the stopper 740 may prevent a vertical position of the temperature sensor 400 from randomly varying on the battery cells 3 and keep the gap between the battery cells 3 and the second protection member 600 constant. The stopper 740 may extend from an inner surface of the second end 722 of the guide rail 720 toward the first support surface 711 or the alignment hole 101. The stopper 740 may be disposed parallel to the first extension surface 521. The design of an extended length of the stopper 740 may be changed in various ways within a range of not protruding inside the alignment hole 101. When the extension portion 520 is completely inserted into the guide rail 720 along the first direction, the stopper 740 may be in contact with the second extension surface 522.

The battery module according to the present embodiment may further include a first separation prevention member 810, a second separation prevention member 820, and a third separation prevention member 830.

The first separation prevention member 810 may restrict movement of the second substrate 300 in the direction opposite to the first direction. That is, the first separation prevention member 810 may function as a component for restricting a vertical movement of the second substrate 300 when the second substrate 300 is positioned in a correct position.

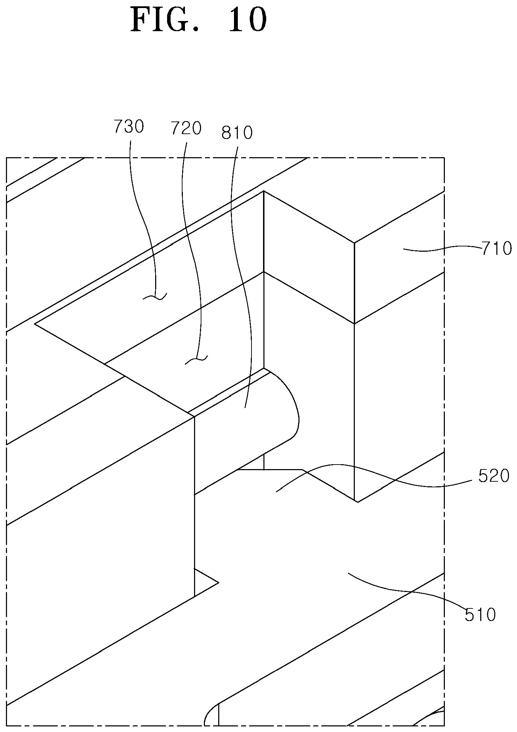

FIG. 10 is a view schematically illustrating a configuration of the first separation prevention member according to one embodiment of the present disclosure.

Referring to FIGS. 4 to 10, the first separation prevention member 810 may be disposed between the entry hole 730 and the stopper 740 inside the guide rail 720. The first separation prevention member 810 may protrude from an inner surface of the guide rail 720 in the direction intersecting the first direction. As one example, the first separation prevention member 810 may protrude from the inner surface of the guide rail 720 in a direction in which the stopper 740 extends, that is, in a direction parallel to the X-Y plane based on FIGS. 4 and 5. A surface of the first separation prevention member 810 may have a curved shape. As one example, the surface of the first separation prevention member 810 may be formed to have a spherical shape.

When the extension portion 520 is completely inserted into the guide rail 720 along the first direction, the first extension surface 521 may be disposed to face the first separation prevention member 810. When the extension portion 520 moves in the direction opposite to the first direction in this state, the first separation prevention member 810 may come into contact with the first extension surface 521, and thus may restrict the movement of the extension portion 520 in the direction opposite to the first direction by a reaction force generated with the first extension surface 521.

A plurality of first separation prevention members 810 may be provided. The number of the plurality of first separation prevention members 810 may be less than or equal to the number of guide rails 720. Each of the first separation prevention members 810 may be individually disposed inside a different guide rail 720.

The second separation prevention member 820 may be spaced apart from the first separation prevention member 810 and may restrict the movement of the second substrate 300 in the direction intersecting the first direction. That is, the second separation prevention member 820 may function as a component for restricting a horizontal movement of the second substrate 300 when the second substrate 300 is positioned in the correct position.

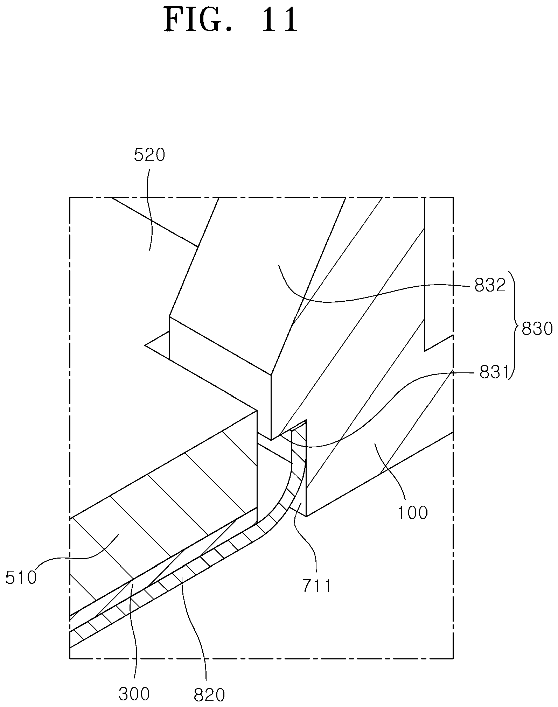

FIG. 11 is a view schematically illustrating configurations of the second separation prevention member and the third separation prevention member according to one embodiment of the present disclosure.

Referring to FIGS. 4 to 9 and FIG. 11, the second separation prevention member 820 may extend from the second protection member 600 in a direction intersecting the first direction. When the extension portion 520 is completely inserted into the guide rail 720 along the first direction, the end of the second separation prevention member 820 may be in close contact with the inner surface of the support body 710, more specifically, the first support surface 711. The second separation prevention member 820 may restrict movement of the second substrate 300 in the direction intersecting the first direction by bringing the side surface of the extension portion 520 into close contact with the inner wall surface of the guide rail 720 by the contact force with the first support surface 711.

The second separation prevention member 820 may be provided to be elastically deformable. As one example, the second separation prevention member 820 may be formed to have the form of a plastic or metal sheet having a thin thickness to be flexible. Accordingly, the second separation prevention member 820 may be brought into closer contact with the first support surface 711 by its own elastic restoring force.

The end of the second separation prevention member 820 may extend to be curved at a set curvature. As one example, the end of the second separation prevention member 820 may be formed to be rounded in a direction opposite to the first direction, that is, upward. Accordingly, the second separation prevention member 820 may prevent the second substrate 300 from moving due to interference with adjacent components when the second substrate 300 is moved in the first direction. The design of the set curvature may be changed in various ways depending on the gap between the second separation prevention member 820 and the inner surface of the support body 710 or the like.

A plurality of second separation prevention members 820 may be provided. As one example, referring to FIG. 5, a pair of second separation prevention members 820 may be provided, and the pair of second separation prevention members 820 may be in close contact with any one peripheral surface of the first support surface 711. However, the plurality of second separation prevention members 820 are not limited thereto, and three or more second separation prevention members 820 may be formed and each of second separation prevention members 820 may be in close contact with a different peripheral surface of the first support surface 711.

The third separation prevention member 830 may extend from the second support surface 712 and prevent the second separation prevention member 820 from being separated from the second support surface 712. That is, the third separation prevention member 830 may function as a component for restricting the second separation prevention member 820 from moving in a vertical direction when the second substrate 300 is positioned in the correct position. A plurality of third separation prevention members 830 may be provided. Each of the third separation prevention members 830 may be disposed at a position facing a different second separation prevention member 820.

The third separation prevention member 830 may include a catching surface 831 and an inclined surface 832.

The catching surface 831 may extend from the second support surface 712 in the direction intersecting the first direction. As one example, the catching surface 831 may extend from the second support surface 712 toward the internal space of the support body 710 and may be vertically disposed with respect to the second support surface 712. When the extension portion 520 is completely inserted into the guide rail 720 along the first direction, the catching surface 831 may be disposed to face the end of the second separation prevention member 820 in a direction parallel to the first direction. Accordingly, the catching surface 831 may restrict the movement of the second separation prevention member 820 by contacting the end of the second separation prevention member 820 when the second separation prevention member 820 moves in the direction opposite to the first direction in a state of being in contact with the first support surface 711.

The inclined surface 832 may extend obliquely from the catching surface 831 toward the second support surface 712. The inclined surface 832 and the catching surface 831 may be sequentially disposed along the first direction. When the extension portion 520 is first inserted into the guide rail 720, the inclined surface 832 may contact the end of the second separation prevention member 820, thereby functioning as a component for guiding the movement of the second separation prevention member 820 so that the second separation prevention member 820 is smoothly moved to a position facing the catching surface 831.

Hereinafter, an assembly process of a battery module according to one embodiment of the present disclosure will be described.

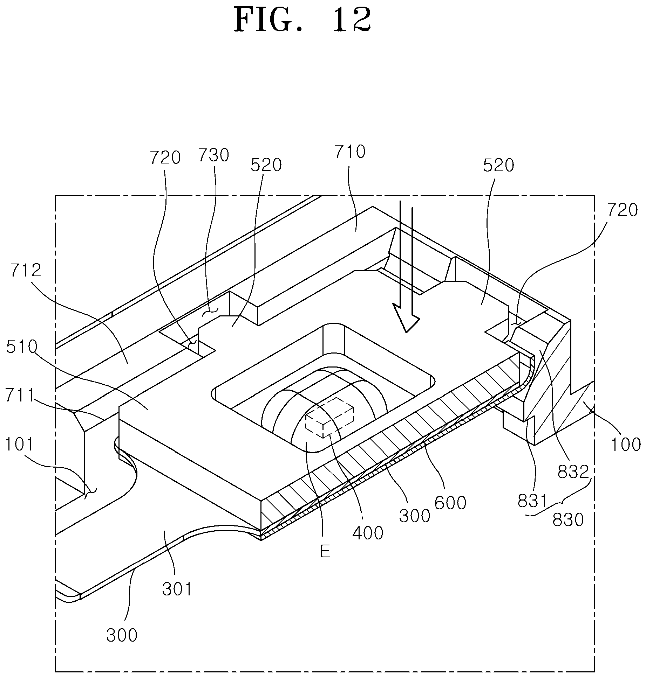

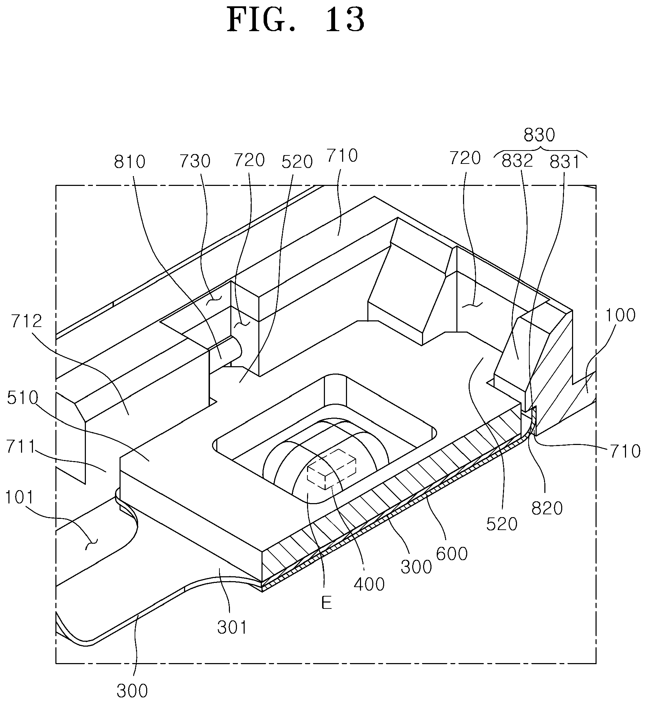

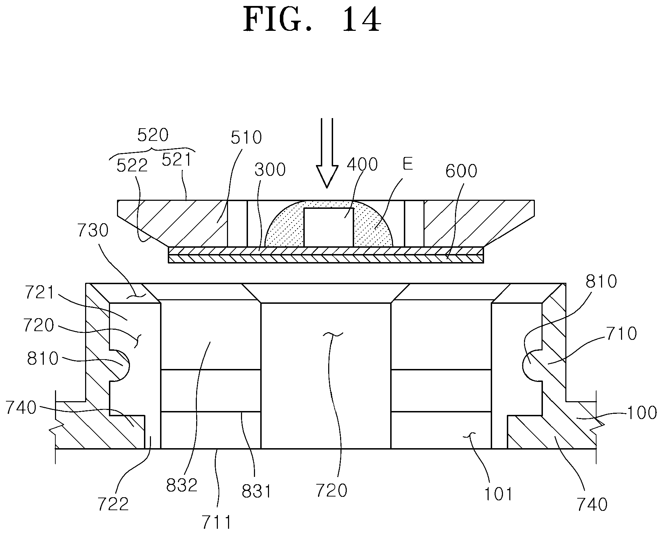

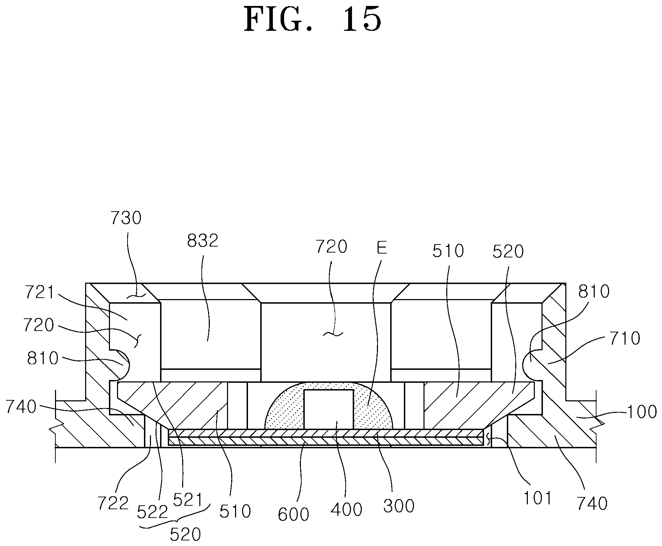

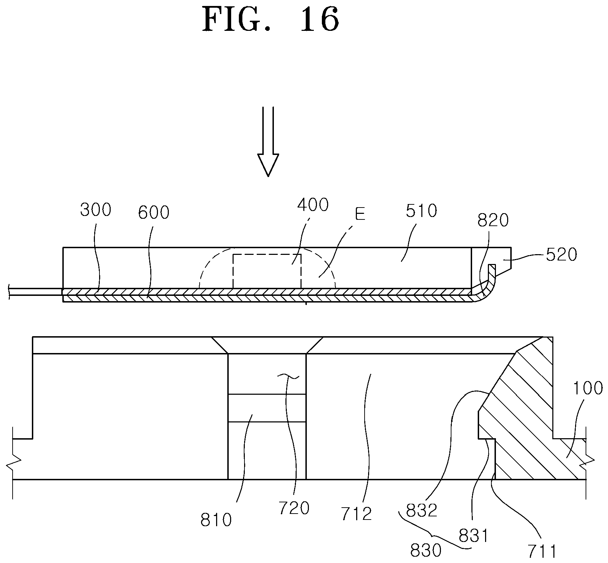

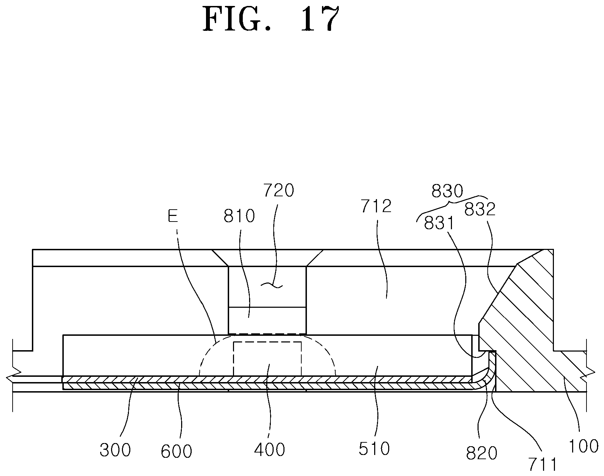

FIGS. 12 to 17 are views schematically illustrating an assembly process of a battery module according to one embodiment of the present disclosure.

Referring to FIGS. 12 to 17, after a first substrate 200 is seated on an upper side of a bus bar holder 100, a second substrate 300 is moved along a first direction in a state in which a second surface 302 thereof is disposed to face an alignment hole 101.

As the second substrate 300 enters an internal space of a support body 710, an extension portion 520 enters a first end 721 of a guide rail 720 through an entry hole 730.

As the extension portion 520 moves from the first end 721 toward a second end 722 along the first direction, a second extension surface 522 contacts a first separation prevention member 810.

As the second extension surface 522 is disposed to be inclined with respect to the first direction, a reaction force generated between the second extension surface 522 and the first separation prevention member 810 is converted into a pressing force for pressing the extension portion 520 in a direction perpendicular to the second extension surface 522.

The extension portion 520 may be elastically deformed in a direction opposite to the first direction by the pressing force, and as the length of the extension portion 520 in a direction intersecting the first direction decreases, the extension portion 520 may continuously move in the first direction.

Then, as the extension portion 520 enters a space between the first separation prevention member 810 and a stopper 740, the second extension surface 522 contacts the stopper 740, and the movement of the second substrate 300 comes to a stop.

Meanwhile, as the second substrate 300 enters the internal space of the support body 710, an end of a second separation prevention member 820 contacts an inclined surface 832 of the third separation prevention member 830.

The second separation prevention member 820 may be elastically deformed in the direction opposite to the first direction by an inclination angle of the inclined surface 832, and as the length of the second separation prevention member 820 in the direction intersecting the first direction decreases, the second separation prevention member 820 may continuously move in the first direction.

Then, as the second extension surface 522 contacts the stopper 740, the second separation prevention member 820 may enter a position facing a catching surface 831 and be restored to its initial form, and thus may be in close contact with the first support surface 711.

## Claims

1. A temperature measurement apparatus (4) comprising:
a bus bar holder (100) comprising an alignment hole (101);
a first substrate (200) seated on the bus bar holder (100);
a second substrate (300) extending from the first substrate (200) and comprising first and second surfaces (302) opposite to each other;
a temperature sensor (400) disposed on the first surface (301);
a first protection member (500) disposed on the first surface (301);
a second protection member (600) disposed on the second surface (302) and surrounding the temperature sensor (400); and
a support member (700) provided on the bus bar holder (100) and configured to support the second substrate (300) with respect to the alignment hole (101),
wherein the first protection member (500) comprises:
a first protection body (510) disposed to surround the temperature sensor (400); and
an extension portion (520) extending from the first protection body (510) and configured to be movably connected to the support member (700), and
wherein the support member (700) comprises:
a support body (710) disposed to surround the alignment hole (101);
a guide rail (720) concavely formed from an inner surface of the support body (710) and comprising a first end (721) and a second end (722) spaced apart from the first end (721) in a first direction;
an entry hole (730) disposed at the first end (721) and passing through the support body (710); and
a stopper (740) disposed at the second end (722) and supporting the extension portion (520), and
wherein the extension portion (520) is configured to be inserted into the guide rail (720) in the first direction.

2. The temperature measurement apparatus (4) as claimed in claim 1, further comprising a first separation prevention member (810) disposed between the entry hole (730) and the stopper (740), and configured to restrict movement of the second substrate (300) in a direction opposite to the first direction.

3. The temperature measurement apparatus (4) as claimed in claim 2, wherein the first separation prevention member (810) protrudes from the guide rail (720) in a direction intersecting the first direction.

4. The temperature measurement apparatus (4) as claimed in claims 2 or 3, wherein a surface of the first separation prevention member (810) has a curved shape.

5. The temperature measurement apparatus (4) as claimed in at least one of claims 2 to 4, wherein the extension portion (520) comprises:
a first extension surface (521) extending from the first protection body (510) in a direction intersecting the first direction; and
a second extension surface (522) extending from the first protection body (510) and disposed to be inclined with respect to the first extension surface (521), and
the first extension surface (521) is disposed to face the first separation prevention member (810) as the second extension surface (522) is in contact with the stopper (740).

6. The temperature measurement apparatus (4) as claimed in at least one of claims 2 to 5, further comprising a second separation prevention member (820) spaced apart from the first separation prevention member (810) and configured to restrict movement of the second substrate (300) in a direction intersecting the first direction.

7. The temperature measurement apparatus (4) as claimed in claim 6, wherein the second separation prevention member (820) extends from the second protection member (600) in the direction intersecting the first direction and is in close contact with the inner surface of the support body (710).

8. The temperature measurement apparatus (4) as claimed in claims 6 or 7, wherein an end of the second separation prevention member (820) is formed to be curved at a set curvature.

9. The temperature measurement apparatus (4) as claimed in at least one of claims 6 to 8, wherein the support body (710) comprises:
a first support surface (711) disposed to face the alignment hole (101); and
a second support surface (712) extending from the first support surface (711) and disposed outside the alignment hole (101), and
the second separation prevention member (820) is in close contact with the first support surface (711).

10. The temperature measurement apparatus (4) as claimed in at least one of claims 6 to 9, further comprising a third separation prevention member (830) extending from the second support surface (712) and configured to prevent the second separation prevention member (820) from being separated from the first support surface (711).

11. The temperature measurement apparatus (4) as claimed in claim 10, wherein the third separation prevention member (830) comprises:
a catching surface (831) extending from the second support surface (712) in the direction intersecting the first direction and disposed to face the second separation prevention member (820); and
an inclined surface (832) obliquely extending from the catching surface (831) toward the second support surface (712).

12. A battery module comprising:
a housing (1);
a plurality of battery cells (3) disposed inside the housing (1); and
the temperature measurement apparatus (4) according to claim 1 configured to measure temperature of the battery cells (3).

13. The battery module as claimed in claim 12, wherein the second protection member (600) is disposed to be spaced apart from the battery cells (3).

## Patentansprüche

1. Temperaturmessvorrichtung (4), umfassend:
einen Sammelschienenhalter (100) mit einem Ausrichtungsloch (101);
ein erstes Substrat (200), das auf dem Sammelschienenhalter (100) sitzt;
ein zweites Substrat (300), das sich vom ersten Substrat (200) erstreckt und eine erste und eine zweite Oberfläche (302) umfasst, die einander gegenüberliegen;
einen Temperatursensor (400), der auf der ersten Oberfläche (301) angeordnet ist;
ein erstes Schutzelement (500), das auf der ersten Oberfläche (301) angeordnet ist;
ein zweites Schutzelement (600), das auf der zweiten Oberfläche (302) angeordnet ist und den Temperatursensor (400) umgibt; und
ein Stützelement (700), das am Sammelschienenhalter (100) vorgesehen und dazu konfiguriert ist, das zweite Substrat (300) in Bezug auf das Ausrichtungsloch (101) zu stützen,
wobei das erste Schutzelement (500) Folgendes umfasst:
einen ersten Schutzkörper (510), der so angeordnet ist, dass er den Temperatursensor (400) umgibt; und
einen Erstreckungsabschnitt (520), der sich vom ersten Schutzkörper (510) erstreckt und zum beweglichen Verbinden mit dem Stützelement (700) konfiguriert ist, und
wobei das Stützelement (700) Folgendes umfasst:
einen Stützkörper (710), der so angeordnet ist, dass er das Ausrichtungsloch (101) umgibt;
eine Führungsschiene (720), die konkav von einer Innenfläche des Stützkörpers (710) ausgebildet ist und ein erstes Ende (721) sowie ein zweites Ende (722) umfasst, das in einer ersten Richtung von dem ersten Ende (721) beabstandet ist;
ein Eintrittsloch (730), das am ersten Ende (721) angeordnet ist und durch den Stützkörper (710) verläuft; und
einen Anschlag (740), der am zweiten Ende (722) angeordnet ist und den Erstreckungsabschnitt (520) stützt, und
wobei der Erstreckungsabschnitt (520) zum Einführen in die Führungsschiene (720) in der ersten Richtung konfiguriert ist.

2. Temperaturmessvorrichtung (4) nach Anspruch 1, umfassend ferner ein erstes Trennungsverhinderungselement (810), das zwischen dem Eintrittsloch (730) und dem Anschlag (740) angeordnet und dazu konfiguriert ist, die Bewegung des zweiten Substrats (300) in einer zur ersten Richtung entgegengesetzten Richtung einzuschränken.

3. Temperaturmessvorrichtung (4) nach Anspruch 2, wobei das erste Trennungsverhinderungselement (810) von der Führungsschiene (720) in einer Richtung vorsteht, die die erste Richtung schneidet.

4. Temperaturmessvorrichtung (4) nach Anspruch 2 oder 3, wobei eine Oberfläche des ersten Trennungsverhinderungselements (810) eine gekrümmte Form aufweist.

5. Temperaturmessvorrichtung (4) nach mindestens einem der Ansprüche 2 bis 4, wobei der Erstreckungsabschnitt (520) Folgendes umfasst:
eine erste Erstreckungsfläche (521), die sich vom ersten Schutzkörper (510) in einer Richtung erstreckt, die die erste Richtung schneidet; und
eine zweite Erstreckungsfläche (522), die sich vom ersten Schutzkörper (510) erstreckt und so angeordnet ist, dass sie in Bezug auf die erste Erstreckungsfläche (521) geneigt ist, und
die erste Erstreckungsfläche (521) so angeordnet ist, dass sie dem ersten Trennungsverhinderungselement (810) zugewandt ist, wenn die zweite Erstreckungsfläche (522) mit dem Anschlag (740) in Kontakt steht.

6. Temperaturmessvorrichtung (4) nach mindestens einem der Ansprüche 2 bis 5, umfassend ferner ein zweites Trennungsverhinderungselement (820), das von dem ersten Trennungsverhinderungselement (810) beabstandet und dazu konfiguriert ist, die Bewegung des zweiten Substrats (300) in einer Richtung, die die erste Richtung schneidet, einzuschränken.

7. Temperaturmessvorrichtung (4) nach Anspruch 6, wobei sich das zweite Trennungsverhinderungselement (820) vom zweiten Schutzelement (600) in der die erste Richtung schneidenden Richtung erstreckt und in engem Kontakt mit der Innenfläche des Stützkörpers (710) steht.

8. Temperaturmessvorrichtung (4) nach Anspruch 6 oder 7, wobei ein Ende des zweiten Trennungsverhinderungselements (820) so ausgebildet ist, dass es mit einer festgelegten Krümmung gekrümmt ist.

9. Temperaturmessvorrichtung (4) nach mindestens einem der Ansprüche 6 bis 8, wobei der Stützkörper (710) Folgendes umfasst:
eine erste Stützfläche (711), die so angeordnet ist, dass sie dem Ausrichtungsloch (101) zugewandt ist; und
eine zweite Stützfläche (712), die sich von der ersten Stützfläche (711) erstreckt und außerhalb des Ausrichtungslochs (101) angeordnet ist, und
das zweite Trennungsverhinderungselement (820) in engem Kontakt mit der ersten Stützfläche (711) steht.

10. Temperaturmessvorrichtung (4) nach mindestens einem der Ansprüche 6 bis 9, umfassend ferner ein drittes Trennungsverhinderungselement (830), das sich von der zweiten Stützfläche (712) erstreckt und dazu konfiguriert ist, zu verhindern, dass sich das zweite Trennungsverhinderungselement (820) von der ersten Stützfläche (711) löst.

11. Temperaturmessvorrichtung (4) nach Anspruch 10, wobei das dritte Trennungsverhinderungselement (830) Folgendes umfasst:
eine Fangfläche (831), die sich von der zweiten Stützfläche (712) in der die erste Richtung schneidenden Richtung erstreckt und so angeordnet ist, dass sie dem zweiten Trennungsverhinderungselement (820) zugewandt ist; und
eine geneigte Oberfläche (832), die sich schräg von der Fangfläche (831) in Richtung der zweiten Stützfläche (712) erstreckt.

12. Batteriemodul, umfassend:
ein Gehäuse (1);
eine Vielzahl von Batteriezellen (3), die innerhalb des Gehäuses (1) angeordnet sind; und
die Temperaturmessvorrichtung (4) nach Anspruch 1, die zum Messen der Temperatur der Batteriezellen (3) konfiguriert ist.

13. Batteriemodul nach Anspruch 12, wobei das zweite Schutzelement (600) so angeordnet ist, dass es von den Batteriezellen (3) beabstandet ist.

## Revendications

1. Appareil de mesure de température (4) comportant :
un support de barre omnibus (100) comportant un trou d'alignement (101) ;
un premier substrat (200) positionné sur le support de barre omnibus (100) ;
un deuxième substrat (300) s'étendant à partir du premier substrat (200) et comportant des première et deuxième surfaces (302) opposées l'une à l'autre ;
un capteur de température (400) disposé sur la première surface (301) ;
un premier organe de protection (500) disposé sur la première surface (301) ;
un deuxième organe de protection (600) disposé sur la deuxième surface (302) et entourant le capteur de température (400) ; et
un organe de support (700) fourni sur le support de barre omnibus (100) et configuré pour supporter le deuxième substrat (300) par rapport au trou d'alignement (101),
dans lequel le premier organe de protection (500) comporte :
un premier corps de protection (510) disposé pour entourer le capteur de température (400) ; et
une partie d'extension (520) s'étendant à partir du premier corps de protection (510) et configurée pour être reliée de façon mobile à l'organe de support (700), et
dans lequel l'organe de support (700) comporte :
un corps de support (710) disposé pour entourer le trou d'alignement (101) ;
un rail de guidage (720) formé de façon concave à partir d'une surface interne du corps de support (710) et comportant une première extrémité (721) et une deuxième extrémité (722) espacée de la première extrémité (721) dans une première direction ;
un trou d'entrée (730) disposé au niveau de la première extrémité (721) et traversant le corps de support (710) ; et
un bouchon (740) disposé au niveau de la deuxième extrémité (722) et supportant la partie d'extension (520), et
dans lequel la partie d'extension (520) est configurée pour être insérée dans le rail de guidage (720) dans la première direction.

2. Appareil de mesure de température (4) selon la revendication 1, comportant en outre un premier organe de prévention de séparation (810) disposé entre le trou d'entrée (730) et le bouchon (740), et configuré pour restreindre le mouvement du deuxième substrat (300) dans une direction opposée à la première direction.

3. Appareil de mesure de température (4) selon la revendication 2, dans lequel le premier organe de prévention de séparation (810) fait saillie à partir du rail de guidage (720) dans une direction qui croise la première direction.

4. Appareil de mesure de température (4) selon la revendication 2 ou 3, dans lequel une surface du premier organe de prévention de séparation (810) présente une forme incurvée.

5. Appareil de mesure de température (4) selon l'une au moins des revendications 2 à 4, dans lequel la partie d'extension (520) comporte :
une première surface d'extension (521) s'étendant à partir du premier corps de protection (510) dans une direction qui croise la première direction ; et
une deuxième surface d'extension (522) s'étendant à partir du premier corps de protection (510) et disposée pour être inclinée par rapport à la première surface d'extension (521), et
la première surface d'extension (521) est disposée pour faire face au premier organe de prévention de séparation (810) alors que la deuxième surface d'extension (522) est en contact avec le bouchon (740).

6. Appareil de mesure de température (4) selon au moins l'une des revendications 2 à 5, comportant en outre un deuxième organe de prévention de séparation (820) espacé du premier organe de prévention de séparation (810) et configuré pour restreindre le mouvement du deuxième substrat (300) dans une direction croisant la première direction.

7. Appareil de mesure de température (4) selon la revendication 6, dans lequel le deuxième organe de prévention de séparation (820) s'étend à partir du deuxième organe de protection (600) dans la direction qui croise la première direction et est en contact étroit avec la surface interne du corps de support (710).

8. Appareil de mesure de température (4) selon les revendications 6 ou 7, dans lequel une extrémité du deuxième organe de prévention de séparation (820) est formée pour être courbée selon une courbure définie.

9. Appareil de mesure de température (4) selon au moins l'une des revendications 6 à 8, dans lequel le corps de support (710) comporte :
une première surface de support (711) disposée pour faire face au trou d'alignement (101) ; et
une deuxième surface de support (712) s'étendant à partir de la première surface de support (711) et disposée à l'extérieur du trou d'alignement (101), et
le deuxième organe de prévention de séparation (820) est en contact étroit avec la première surface de support (711).

10. Appareil de mesure de température (4) selon au moins l'une des revendications 6 à 9, comportant en outre un troisième organe de prévention de séparation (830) s'étendant à partir de la deuxième surface de support (712) et configuré pour empêcher le deuxième organe de prévention de séparation (820) d'être séparé de la première surface de support (711).

11. Appareil de mesure de température (4) selon la revendication 10, dans lequel le troisième organe de prévention de séparation (830) comporte :
une surface de capture (831) s'étendant à partir de la deuxième surface de support (712) dans la direction qui croise la première direction et disposée pour faire face au deuxième organe de prévention de séparation (820) ; et
une surface inclinée (832) s'étendant de façon oblique à partir de la surface de prise (831) en direction de la deuxième surface de support (712).

12. Module de batterie comportant :
un logement (1) ;
une pluralité d'éléments de batterie (3) disposés à l'intérieur du logement (1) ; et
l'appareil de mesure de température (4) selon la revendication 1 configuré pour mesurer la température des éléments de batterie (3).

13. Module de batterie selon la revendication 12, dans lequel le deuxième organe de protection (600) est disposé pour être espacé des éléments de batterie (3).
